Europäisches Patentamt

European Patent Office

Office européen des brevets

(19)

(11) Veröffentlichungsnummer: **0 086 929**
**B1**

(12) EUROPÄISCHE PATENTSCHRIFT

(45) Veröffentlichungstag der Patentschrift:
**04.12.85**

(21) Anmeldenummer: **82890180.1**

(22) Anmeldetag: **09.12.82**

(51) Int. Cl.⁴: **C 21 C 5/48**

(54) **Kippbares metallurgisches Gefäss.**

(30) Priorität: **27.01.82 AT 282/82**

(43) Veröffentlichungstag der Anmeldung:
**31.08.83 Patentblatt 83/35**

(45) Bekanntmachung des Hinweises auf die Patenterteilung:
**04.12.85 Patentblatt 85/49**

(84) Benannte Vertragsstaaten:
**BE DE GB IT LU**

(56) Entgegenhaltungen:
**DE - A - 2 065 176**
**DE - A - 3 048 199**
**FR - A - 2 253 093**

(73) Patentinhaber: **VOEST-ALPINE Aktiengesellschaft, Werksgelände, A-4010 Linz (AT)**

(72) Erfinder: **Eysn, Manfred, Eschenbachweg 23, A-4040 Puchenau (AT)**
Erfinder: **Klotzmann, Walter, Adlerweg 8, A-4053 Haid (AT)**
Erfinder: **Koller, Helmut, Roseggerstrasse 38, A-4020 Linz (AT)**
Erfinder: **Losbichler, Gerhard, A-4303 St. Pantaleon 65 (AT)**

(74) Vertreter: **Wolfram, Gustav, Dipl.-Ing., Schwindgasse 7 P.O. Box 205, A-1041 Wien (AT)**

**Beschreibung**

Die Erfindung betrifft ein kippbares metallurgisches Gefäß, insbesondere Stahlwerkskonverter, dessen Tragzapfen in am Fundament abgestützten Lagern drehbar gelagert sind, wobei mindestens einer der Tragzapfen zur Aufnahme mindestens eines der Medienversorgung des metallurgischen Gefäßes dienenden und mit dem Gefäß verbundenen Leitungsrohres hohl ausgebildet ist und das Leitungsrohr an einer dieses Leitungsrohr mit einem ortsfesten Anschlußstück verbindenden Schlauchleitung angeschlossen ist, die an einer am Tragzapfen montierten Führung geführt ist.

Ein Konverter dieser Art ist aus der DE-OS 2 065 176 bekannt, wobei zwei Medienzuführungsleitungen vorgesehen sind. Durch die in den Kippzapfen einmündenden Schlauchleitungen wird zwar die freie Kippbarkeit des Konverters zwischen zwei End-Kipplagen eingeschränkt, jedoch ist es möglich, auf einen Drehanschluß zu verzichten. Dies hat den Vorteil, daß die Medienzufuhr unabhängig vom Zustand der im Drehanschluß vorgesehenen Dichtungen ist, denn diese können leicht beschädigt werden und müssen als Verschleißteile von Zeit zu Zeit ausgetauscht werden.

Die Schlauchleitungen sind bei dem bekannten Gefäß ausgehend vom ortsfesten Anschlußstück jeweils über eine ortsfeste bogenförmige Führung geführt und münden nach freiem Durchgang radial zur Mittelachse der Tragzapfen in diesen ein. Um ein Knicken der Schlauchleitungen bei Verschwenken des Konverters an der Einmündungsstelle zu verhindern, sind am Tragzapfen für jeden Schlauch zwei voluminöse Führungen vorgesehen. Diese Führungen sind nur schwer unterzubringen, da die Platzverhältnisse seitlich des Konverters sehr beengt sind.

Die Führungen weisen bei dem bekannten Gefäß entgegengesetzt gerichtete Krümmungen auf, wobei der Schlauch bei Kippen des Konverters nach der einen Richtung auf der einen Führung anliegen gelassen wird und bei Kippen des Konverters in die entgegengesetzte Richtung von dieser Führung abhebt und auf der anderen Führung zum Anliegen kommt. Dadurch wird der Schlauch von der gestreckten Lage aus nach zwei verschiedenen Richtungen gebogen.

Die Erfindung bezweckt die Vermeidung dieser Nachteile und stellt sich die Aufgabe, ein metallurgisches Gefäß der eingangs beschriebenen Art zu schaffen, bei dem keine voluminösen Führungen, insbesondere keine ortsfesten Führungen erforderlich sind, und bei dem der Schlauch ausgehend von der gestreckten Lage bei Kippen des Gefäßes in entgegengesetzte Richtungen stets nur in eine Richtung gebogen wird.

Diese Aufgabe wird erfindungsgemäß dadurch gelöst, daß die Führung als konzentrisch zum Tragzapfen angeordnete kreiszylindrische Trommel ausgebildet ist, wobei das Leitungsrohr mit seinem durch die Trommel nach außen ragenden Ende tangential zur Trommeloberfläche gerichtet ist und die Schlauchleitung in Verlängerung dieses Endes in einer End-Kippstellung des Gefäßes auf der Trommel aufgewickelt und in der entgegengesetzt gerichteten End-Kippstellung von der Trommel abgewickelt ist.

Gemäß einer bevorzugten Ausführungsform ist die Schlauchleitung zwischen dem ortsfesten Anschlußstück und der Trommel mittels einer Spannrolle gespannt, wobei zweckmäßig die Spannrolle mittels eines Gewichtes gespannt ist. Diese Ausführungsform ist insbesondere für Schläuche mit geringem Eigengewicht von besonderem Vorteil.

Da in der Regel der Platz unterhalb der Konverterkippachse sehr beschränkt ist, ist vorteilhaft die Spannrolle oberhalb der Trommel angeordnet.

Um zu große Schlauchdurchmesser, die einen großen Trommeldurchmesser bedingen würden, zu vermeiden, wird zweckmäßig ein in großen Mengen benötigtes Medium über mindestens zwei Schlauchleitungen dem Konverter zugeführt, wobei die für jede Schlauchleitung nach außen ragenden Enden gemeinsam in ein Sammelrohr münden.

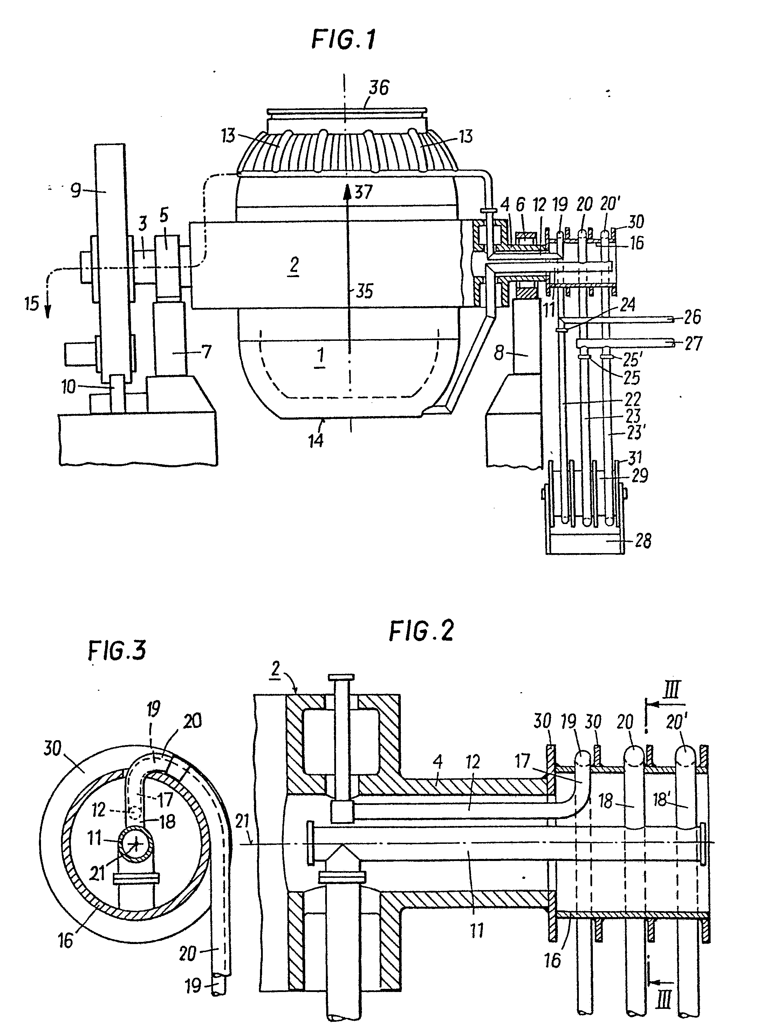

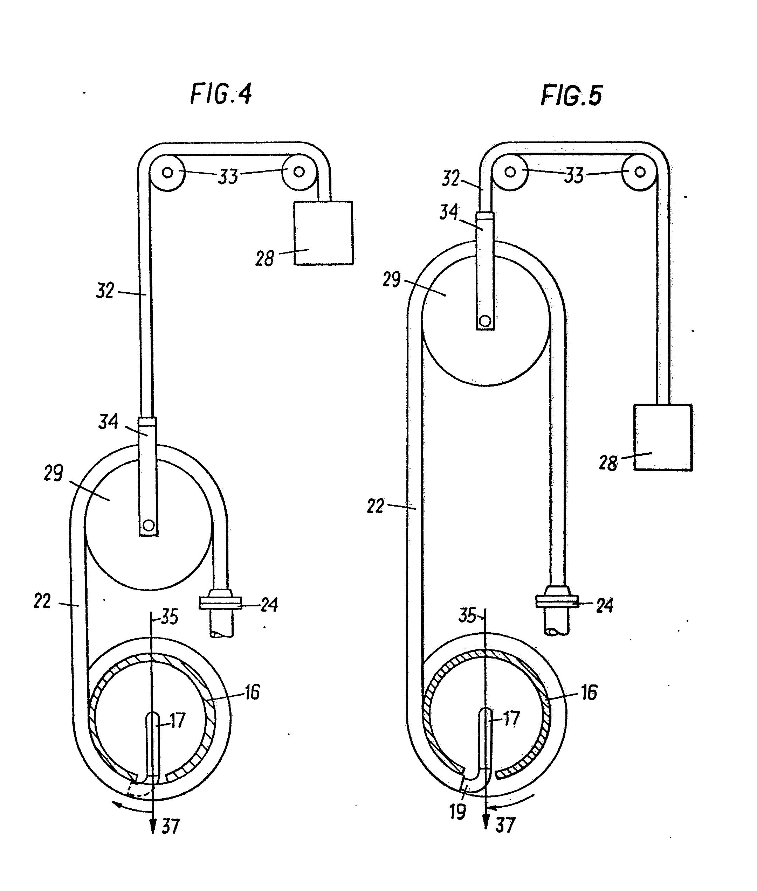

Die Erfindung ist nachfolgend an zwei Ausführungsbeispielen näher erläutert, wobei Fig. 1 eine Konverteranlage im Aufriß und teilweise im Schnitt, Fig. 2 ein Detail der Fig. 1 in vergrößertem Maßstab und Fig. 3 einen gemäß der Linie III-III der Fig. 2 geführten Schnitt zeigen. Die Fig. 4 und 5 zeigen in zu Fig. 3 analoger Darstellung eine weitere Ausführungsform, wobei Fig. 4 den Schlauch in aufgewickelter End-Stellung und Fig. 5 den Schlauch in abgewickelter End-Stellung veranschaulichen.

Mit 1 ist ein Konverter bezeichnet, der in einem als Schweißkonstruktion ausgebildeten Tragring 2 gelagert ist. Der Tragring weist zwei einander gegenüberliegende, in ihm eingeschweißte, hohle Tragzapfen 3, 4 auf, von denen einer in einem Festlager 5 und einer in einem Loslager 6 gelagert ist. Die Lager 5, 6 sind über die Ständer 7, 8 am Fundament montiert. Der Festlager-Tragzapfen 3 trägt den sich über eine Drehmomentenstütze 10 am Fundament abstützenden Kippantrieb 9. Durch den hohlen Loslagerzapfen 4 sind Leitungsrohre 11, 12, die zur Medienversorgung, wie z. B. zur Kühlwasserzufuhr für die Konverterhutkühlung 13 bzw. zur Medienzufuhr zum Konverterboden 14 dienen, eingeführt. Das Kühlwasser wird in gleicher Weise, wie es durch den Loslager-Tragzapfen 4 eingeleitet wird, durch den ebenfalls hohl ausgebildeten Festlager-Tragzapfen abgeleitet, was durch die Pfeile 15 angedeutet ist.

Am freien Ende des Loslager-Tragzapfens 4 ist konzentrisch zu ihm eine hohle Trommel 16 montiert. Die Leitungsrohre 11, 12 sind bis in die Trommel verlängert und weisen jeweils einen radial zur Trommeloberfläche gerichteten Rohrteil 17, 18, 18' auf, welche Rohrteile mit ihrem die Trommel 16 nach außen durchsetzenden Ende 19, 20, 20' tangential zur Trommeloberfläche gerichtet sind. Die Enden 19, 20, 20' der Leitungsrohre liegen weiters jeweils in einer Ebene senkrecht zur Kippzapfenachse 21. Das Leitungsrohr 11, das zu Anspeisung des Konverterbodens 14 gedacht ist, weist zwei radial gerichtete Rohrteile 18, 18' auf, die beide in das Leitungsrohr 11 münden, so daß dieses Leitungsrohr 11 als Sammelrohr für diese Rohrteile 18, 18' wirkt. Die nach außen ragenden Enden 19, 20, 20' der Rohrteile sind jeweils an Schlauchleitungen 22, 23, 23' angeschlossen, die mit ihrem anderen Ende jeweils an ein ortsfestes Anschlußstück 24, 25, 25' von Medienzuführungsleitungen 26, 27 gekoppelt sind.

Die Schlauchleitungen 22, 23, 23' sind in Verlängerung der entsprechenden Enden 19, 20, 20' der Rohrteile 17, 18, 18' gerichtet und in einer End-Kippstellung des Konverters 1 auf der Trommel 16 aufgewickelt und in der entgegengesetzt gerichteten End-Kippstellung des Gefäßes 1 von der Trommel 16 abgewickelt. Die abgewickelte Stellung ist in den Fig. 1 bis 3 gezeigt.

Um eine sichere Führung der Schläuche 22, 23, 23' von den ortsfesten Anschlußstücken 24, 25, 25' zu den Enden 19, 20, 20' der Rohrteile 17, 18, 18' zu erreichen; sind die Schläuche mittels einer mit einem Gewicht 28 belasteten Spannrolle 29 gespannt. Anstelle des Gewichtes 28 könnte die Spannrolle 29 auch federbelastet sein. Sowohl die Spannrolle 29 als auch die am Ende des Tragzapfens befestigte Trommel 16 weisen senkrecht zu ihren Achsen gerichtete flanschartige Führungsbleche 30, 31 auf, die zur seitlichen Führung der Schläuche 22, 23, 23' dienen. Die Außendurchmesser der Trommel 16 und der Spannrolle 29 sind gleich oder größer bemessen als der kleinstmögliche Biegeradius der Schläuche 22, 23, 23'.

Wie aus Fig. 3 ersichtlich ist, werden die Schläuche 22, 23, 23' von der gestreckten Lage aus stets nach der gleichen Richtung gebogen, was der Lebensdauer der Schläuche zugute kommt. Die Rohrleitung 11 ist an zwei Schläuche angeschlossen, um einen Schlauch mit zu großem Durchmesser sowie zu großem kleinsten Biegeradius zu vermeiden. Dadurch kann der Durchmesser der Trommel 16 klein gehalten werden.

Für entsprechend schwere Schläuche, die infolge ihres Eigengewichtes einwandfrei durchhängen, kann auf die Spannrollen 29 verzichtet werden.

Bei der in den Fig. 4 und 5 dargestellten Ausführungsform ist die Spannrolle 29 oberhalb der Trommel 16 angeordnet, wobei das Gegengewicht 28 der Spannrolle mittels eines Seiles 32, das über Umlenkrollen 33 geführt ist, mit einem Büngel 34 der Spannrolle 29 verbunden ist. Die Führung der Schläuche nach oben gemäß den Fig. 4 und 5 ist besonders vorteilhaft, da in der Regel die Platzverhältnisse seitlich unterhalb des Tragzapfens 4 sehr beengt sind, wogegen im Bereich seitlich über dem Tragzapfen 4 meist ausreichend Platz vorhanden ist und die Bedienung des Konverters bei Belegung dieses Platzes nicht behindert wird.

Fig. 4 zeigt den Schlauch 22 in aufgewickeltem Zustand, d. h. der Konverter 1, dessen Längsachse mit 35 bezeichnet ist und dessen Mündung 36 durch den Pfeil 37 veranschaulicht ist, befindet sich im Kopfstand in einer Kipp-Endstellung.

Fig. 5 zeigt den Schlauch 22 in abgewickeltem Zustand. Auch hier befindet sich der Konverter 1 im Kopfstand, jedoch in der zweiten End-Kippstellung um 360° im Uhrzeigersinn gegenüber der in Fig. 4 dargestellten Stellung gedreht.

Die erfindungsgemäße Einrichtung kann für die Zu- und Abfuhr der verschiedensten Medien, die für den Konverterbetrieb notwendig sind, verwendet werden. Es ist auch möglich, eine der Leitungen mittels eines Drehanschlusses an das ortsfeste Rohrleitungssystem anzuschließen und andere Leitungen erfindungsgemäß an einen Schlauch anzuschließen. Will man den Konverter um mehr als 360° drehen, so werden die Schläuche entsprechend lang bemessen und dementsprechend in beliebig vielen Windungen auf der Trommel 16 aufgewickelt. Zweckmäßig ist der Antrieb mit einer Verriegelung versehen, so daß der Konverter nicht über die End-Stellungen, in denen die Schläuche 22, 23, 23' auf der Trommel 16 entweder ganz aufgewickelt oder ganz abgewickelt sind, gedreht werden kann.

## Patentansprüche

1. Kippbares metallurgisches Gefäß (1), insbesondere Stahlwerkskonverter (1), dessen Tragzapfen (3, 4) in am Fundament abgestützten Lagern (5, 6) drehbar gelagert sind, wobei mindestens einer der Tragzapfen (3, 4) zur Aufnahme mindestens eines der Medienversorgung des metallurgischen Gefäßes (1) dienenden und mit dem Gefäß verbundenen Leitungsrohres (11, 12) hohl ausgebildet ist und das Leitungsrohr (11, 12) an einer dieses Leitungsrohr mit einem ortsfesten Anschlußstück (24, 25, 25') verbindenden Schlauchleitung (22, 23, 23') angeschlossen ist, die an einer am Tragzapfen (3, 4) montierten Führung (16) geführt ist, dadurch gekennzeichnet, daß die Führung als konzentrisch zum Tragzapfen (3, 4) angeordnete kreiszylindrische Trommel (16) ausgebildet ist, wobei das Leitungsrohr (11, 12) mit seinem durch die Trommel nach außen ragenden Ende (19, 20, 20') tangential zur Trommeloberfläche gerichtet ist und die Schlauchleitung (22, 23, 23') in Verlängerung dieses Endes (19, 20, 20') in einer End-Kippstellung des Gefäßes (1) auf der Trommel (16) aufgewickelt und in der entgegengesetzt gerichteten End-Kippstellung von der Trommel (16) abgewickelt ist.

2. Gefäß nach Anspruch 1, dadurch gekennzeichnet, daß die Schlauchleitung (22, 23, 23') zwischen dem ortsfesten Anschlußstück (24, 25, 25') und der Trommel (16) mittels einer Spannrolle (29) gespannt ist.

3. Gefäß nach Anspruch 2, dadurch gekennzeichnet, daß die Spannrolle (29) mittels eines Gewichtes (28) gespannt ist.

4. Gefäß nach Anspruch 2 oder 3, dadurch gekennzeichnet, daß die Spannrolle (29) oberhalb der Trommel (16) angeordnet ist (Fig. 4, 5).

5. Gefäß nach den Ansprüchen 1 bis 4, dadurch gekennzeichnet, daß ein in großen Mengen benötigtes Medium über mindestens zwei Schlauchleitungen (23, 23') dem Konverter zugeführt wird, wobei die für jede Schlauchleitung (23, 23') nach außen ragenden Enden (20, 20') gemeinsam in ein Sammelrohr (11) münden (Fig. 1 bis 3).

6. Gefäß nach den Ansprüchen 1 bis 5, dadurch gekennzeichnet, daß die Trommel (16) und gegebenenfalls die Spannrolle (29) senkrecht zu ihren Achsen gerichtete flanschartige Führungsbleche (30, 31) aufweisen.

## Claims

1. A tiltable metallurgical vessel (1), in particular a steel works converter (1), whose carrying trunnions (3, 4) are rotatably mounted in bearings (5, 6) supported on the base, wherein at least one of the carrying trunnions (3, 4) is designed to be hollow to receive at least one conduit pipe (11, 12) serving for the media supply of the metallurgical vessel (1) and connected with the vessel, and the conduit pipe (11, 12) is connected to a hose pipe (22, 23, 23') connecting this conduit pipe with a stationary connection piece (24, 25, 25') and guided on a guide (16) mounted on the carrying trunnion (3, 4), characterised in that the guide is designed as a circularly cylindrical drum (16) arranged concentrically to the carrying trunnion (3, 4), the conduit pipe (11, 12), with its end (19, 20, 20') directed outwardly through the drum, being directed tangentially with respect to the drum surface, and the hose pipe (22, 23, 23'), in the extension of this end (19, 20, 20'), being wound on the drum (16) in an end tilted position of the vessel (1) and being wound off the drum (16) in the oppositely directed end tilted position.

2. A vessel according to claim 1, characterised in that the hose pipe (22, 23, 23') is tensed between the stationary connection piece (24, 25, 25') and the drum (16) by means of a tension pulley (29).

3. A vessel according to claim 2, characterised in that the tension pulley (29) is tensioned by means of a weight (28).

4. A vessel according to claim 2 or 3, characterised in that the tension pulley (29) is arranged above the drum (16) (Figs. 4, 5).

5. A vessel according to claims 1 to 4, characterised in that a medium required in large amounts is supplied to the converter via at least two hose pipes (23, 23'), outwardly projecting ends (20, 20') for each hose pipe (23, 23') commonly running into a collection pipe (11) (Figs. 1 to 3).

6. A vessel according to claims 1 to 5, characterised in that the drum (16) and, if desired, the tension pulley (29) comprise flange-like guide plates (30, 31) directed perpendicular to their axes.

## Revendications

1. Récipient métallurgique basculant (1), en particulier convertisseur d'aciérie, dont les tourillons porteurs (3, 4) sont montés à rotation dans des paliers (5, 6) prenant appui sur la fondation, où au moins l'un des tourillons porteurs (3, 4) est fait creux pour recevoir au moins un des tuyaux de conduite (11, 12) servant à l'alimentation en agents du récipient métallurgique (1), et relié au récipient, et où le tuyau de conduite (11, 12) est raccordé à un tuyau souple (22, 23, 23') reliant ce tuyau de conduite à un raccord fixe (24, 25, 25'), le tuyau souple étant guidé par un guide (16) monté sur le tourillon porteur (3, 4), caractérisé en ce que le guide est constitué par un tambour (16) en forme de cylindre circulaire, disposé concentriquement au tourillon porteur (3, 4), le tuyau de conduite (11, 12) étant dirigé, à son extrémité (19, 20, 20') dépassant vers l'extérieur à travers le tambour, tangentiellement à la surface du tambour, et le tuyau souple (22, 23, 23'), en prolongement de cette extrémité (19, 20, 20'), étant enroulé sur le tambour (16) dans une position extrême de basculement du récipient et étant déroulé du tambour (16) dans la position extrême de basculement en sens opposé.

2. Récipient suivant la revendication 1, caractérisé en ce que le tuyau souple (22, 23, 23') entre le raccord fixe (24, 25, 25') et le tambour (16), est tendu au moyen d'une poulie de tension (29).

3. Récipient suivant la revendication 2, caractérisé en ce que la poulie de tension (29) est tendue au moyen d'un poids (28).

4. Récipient suivant la revendication 2 ou 3, caractérisé en ce que la poulie de tension (29) est disposée au-dessus du tambour (16) (figs. 4, 5).

5. Récipient suivant les revendications 1 à 4, caractérisé en ce qu'un agent nécessaire en grande quantité est judicieusement amené au convertisseur par au moins deux tuyaux souples (23, 23'), les extrémités (20, 20') dépassant vers l'extérieur pour chaque tuyau souple (23, 23') débouchant en commun dans un tuyau collecteur (11) (figs. 1 à 3).

6. Récipient suivant les revendications 1 à 5, caractérisé en ce que le tambour (16) et éventuellement la poulie de tension (29) comportent des tôles de guidage (30, 31) du genre de brides, dirigées perpendiculairement à leurs axes.

0 086 929

FIG.1

FIG.3

FIG.2

FIG.4

FIG.5